# EUROPEAN PATENT APPLICATION

(11) **EP 1 519 261 A2**
(43) Date of publication of application: **30.03.2005**
(21) Application number: 04255892.4
(22) Date of filing: 27.09.2004
(51) Int. Cl.: G06F 3/06

(54) **Method, apparatus, system and program for creating, recording and reading a system file image, a medium storing the program and a medium storing the system file image**

(30) Priority: 25.09.2003 JP 2003332952
(71) Applicant: Ricoh Company, Ltd., Tokyo 143-8555 (JP)
(72) Inventor: Gotoh, Hiroshi, Ohta-ku, Tokyo 143-8555 (JP)
(74) Representative: Mounteney, Simon James

(57) **Abstract**

A technique for creating, recording, and reading a system file image for an optical disc is disclosed, the technique being capable of utilizing the limited data area of an optical disc in an improved manner. A system file image of user data which is created using this technique includes a first file system section describing the user data in a first format, a second file system section describing the user data in a second format and having a length larger than a length of the first file system section, and a volume descriptor section describing the first and second file system sections in the first format and the second format. By reducing the amount of information stored in the first file system section, the data area of the optical disc is more effectively used.

## Description

### FIELD OF THE INVENTION

The present invention relates to a technique of creating, recording and reading a system file image, and more particularly to a method, apparatus, system, and computer program and medium for creating, recording, and reading a system file image for an optical disc, and a medium storing the system file image.

### DESCRIPTION OF THE RELATED ART

Optical discs, such as CDs and DVDs, are widely used for information delivery. To increase compatibility among a variety of platforms and operating systems, various standards are introduced to the logical formats of the optical discs.

For example, the ISO 9660 standard (hereinafter, referred to as the ISO standard) is a logical format designed originally for CD-ROMs, which can be utilized by a variety of operating systems, including MS-DOS, Windows, Macintosh, and UNIX. The Volume and File Structure of CD-ROM for Information Interchange, also known as the ISO 9660 Specification, is hereby incorporated by reference.

However, the ISO standard has a strong DOS influence that may lead to some limitations, such as the limitations in character set, file name length, and/or directory tree depth, for example. To overcome these and other limitations, some extensions to the ISO 9660 standard are introduced, such as Joliet and Rock Ridge. Further, UDF (universal disc format) bridge (hereinafter, referred to as the UDF standard) is introduced to ensure compatibility with DVDs.

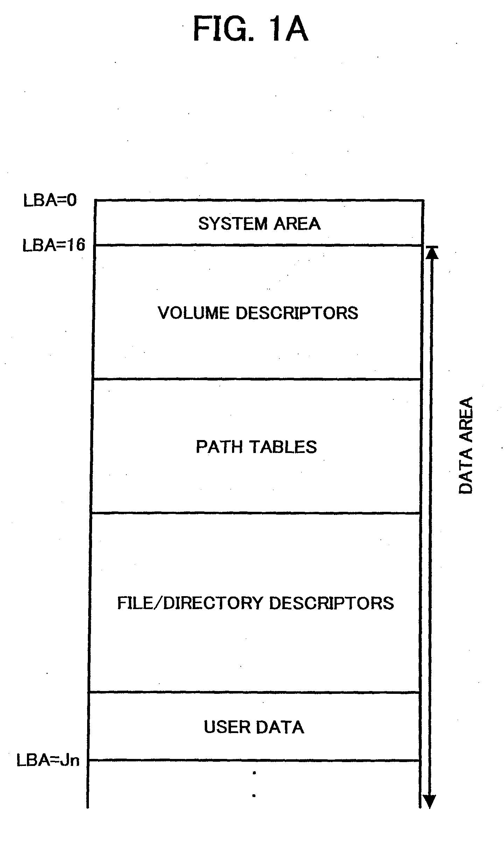

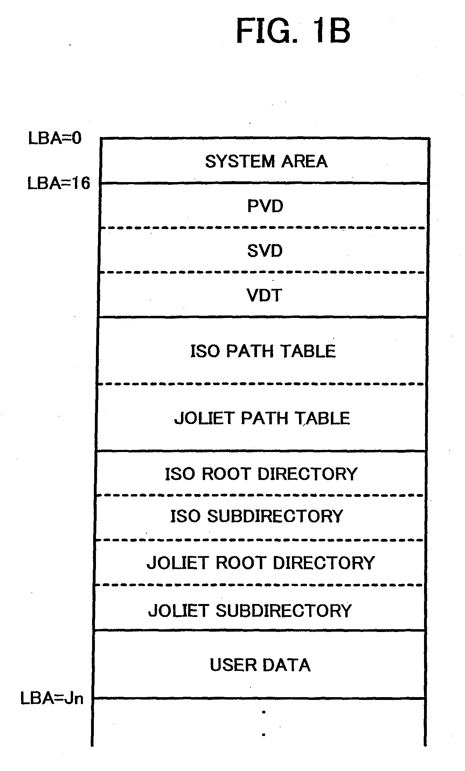

FIGS. 1A and 1B illustrate an exemplary structure of an optical disc volume created in compliance with the Joliet standard, using a conventional technique. As shown in FIGS. 1B, the Joliet standard utilizes a SVD (supplementary volume descriptor) to support a Unicode character set. The Joliet Specification is hereby incorporated by reference.

As shown in FIG. 1A, the disc volume includes a system area and a data area. The system area, which includes logical sectors 0 through 15, is reserved for system use. The data area, which includes the remaining logical sectors, stores actual user data and is organized into a plurality of logical blocks assigned with unique logical block numbers (LBA).

The data area additionally includes a group of descriptors, including volume descriptors, path tables, and file/directory descriptors.

Referring to FIG. 1B, the volume descriptor includes a PVD (primary volume descriptor) and the SVD, and is terminated by a volume descriptor set terminator (VDT). The volume descriptor may additionally include a volume partition descriptor and a boot descriptor.

The path tables include a path table defined in the ISO standard ("ISO path table") and a path table defined in the Joliet standard ("Joliet path table").

The file/directory descriptors include a root directory descriptor defined in the ISO standard ("ISO root directory"), a subdirectory descriptor defined in the ISO standard ("ISO subdirectory"), a root directory descriptor defined in the Joliet standard ("Joliet root directory"), and a subdirectory descriptor defined in the Joliet standard ("Joliet subdirectory").

The group of descriptors stores various kinds of information regarding the user data stored in the disc volume, including information regarding its size and location in the directory hierarchy, for example.

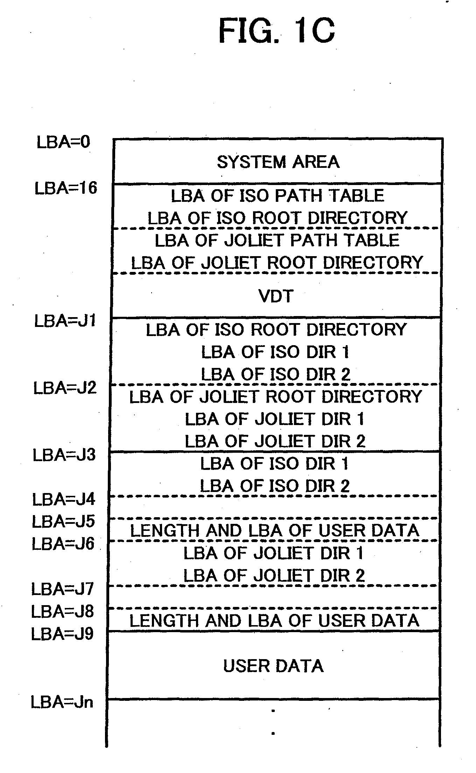

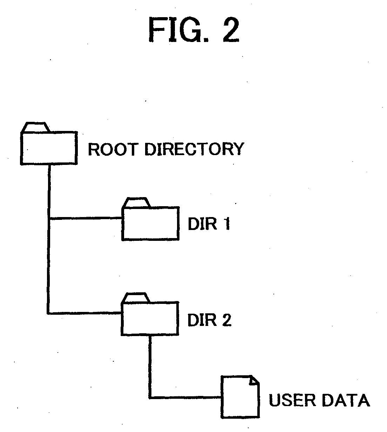

FIG. 2 illustrates an exemplary directory hierarchy, in which the user data is stored in a subdirectory named "DIR 2" under a root directory. In such a case, the group of descriptors shown in any one of FIGS. 1A and 1B stores information in a manner described referring to FIG. 1C.

As shown in FIG. 1C, the PVD starts at the LBA Of 16. The ISO root directory starts at the LBA of J1. The Joliet root directory starts at the LBA of J2. The ISO root directory starts at the LBA of J3. The ISO subdirectory starts at the LBA of J4. The Joliet root directory starts at the LBA of J6. The Joliet subdirectory starts at the LBA of J7. The user data is stored at the LBA of J9.

The PVD stores the number ("J1") assigned to the LBA starting the ISO path table, as a link to the ISO path table. The PVD further stores the number ("J3") assigned to the LBA starting the ISO root directory, as a link to the ISO root directory.

The SVD stores the number ("J2") assigned to the LBA starting the Joliet path table, as a link to the Joliet path table. The SVD further stores the number ("J6") assigned to the LBA starting the Joliet root directory, as a link to the Joliet root directory.

The ISO path table stores the number ("J3") assigned to the LBA starting the ISO root directory, as a link to the ISO root directory. The ISO path table further stores the number assigned to the LBA starting the ISO subdirectory, as a link to the ISO subdirectory. Particularly, in this example, the number ("J4") assigned to the LBA starting the subdirectory DIR 1 defined in the ISO standard ("ISO DIR 1"), and the number ("J5") assigned to the LBA starting the subdirectory DIR 2 defined in the ISO standard ("ISO DIR 2") are stored.

The Joliet path table stores the number ("J6") assigned to the LBA starting the Joliet root directory, as a link to the Joliet root directory.

The Joliet path table further stores the number assigned to the LBA starting the Joliet subdirectory, as a link to the Joliet subdirectory. Particularly, in this example, the number ("J7") assigned to the LBA starting the subdirectory DIR 1 defined in the Joliet standard ("Joliet DIR1"), and the number ("J8") assigned to the LBA starting the subdirectory DIR 2 defined in the Joliet standard ("Joliet DIR 2") are stored.

The ISO root directory stores the number assigned to the LBA starting the ISO subdirectory, as a link to the ISO subdirectory. Particularly, in this example,' the number ("J4") assigned to the LBA starting the subdirectory ISO DIR 1, and the number ("J5") assigned to the LBA starting the subdirectory ISO DIR 2 are stored.

The subdirectory ISO DIR 1 stores information regarding the contents of the subdirectory ISO DIR 1. When it contains no user data, as FIG. 2, it stores dummy information, having 0 values, for example.

The subdirectory ISO DIR 2 stores information regarding the contents of the subdirectory ISO DIR 2. Particularly, in this example, it stores the length of the user data, as well as the number ("J9") assigned to the LBA starting the user data, in compliance with the ISO standard.

The Joliet root directory stores the number assigned to the LBA starting the Joliet subdirectory, as a link to the Joliet subdirectory. Particularly, in this example, the number ("J7") assigned to the LBA starting the subdirectory Joliet DIR1, and the number ("J8") assigned to the LBA starting the subdirectory Joliet DIR2 are stored.

The subdirectory JOLIET DIR 1 stores information regarding the contents of the subdirectory JOLIET DIR 1. When it contains no user data, as shown in FIG. 2, it stores dummy information, having 0 values, for example.

The subdirectory JOLIET DIR 2 stores information regarding the contents of the subdirectory JOLIET DIR 2. Particularly, in this example, it stores the length of the user data, as well as the number ("J9") assigned to the LBA starting the user data, in compliance with the Joliet standard.

One drawback of the disc volume created in the Joliet standard in the conventional manner is that the group of descriptors consumes a large amount of space in the data area, even though it does not always provide useful information to an operating system.

For example, in the above-described case, if Windows is used as the operating system for reading the user data having the directory hierarchy shown in FIG. 2, descriptors defined in the ISO standard become useless.

In order to utilize the limited data area, there is a need for managing contents of information stored in the data area, according to an operating system.

### BRIEF SUMMARY OF THE INVENTION

In light of the above, the present invention provides a novel technique of creating, recording, and reading a system file image for an optical disc, capable of utilizing the limited data area of the optical disc.

In one example, the novel technique includes a method for creating a system file image corresponding to user data to be written onto an optical disc. Such an image creating method is preferably performed by an image processing system including an information processing apparatus and/or an optical disc apparatus.

First, the information processing system stores user data organized in a directory hierarchy, and obtains its file/directory information including information regarding the directory hierarchy.

Next, the information processing system creates, virtually, a system file image of the user data. For example, the system file image includes a volume descriptor section, a first file system section, and a second file system section. The volume descriptor section describes the use of the data area in a first format and a second format. The first file system section describes the user data in the first format, using the file/directory information. The second file system section describes the user data in the second format, using the file/directory information, and has a length larger than a length of the first file system section.

The first format includes, for example, the ISO 9660 standard, while the second format includes, for example, the Joliet standard. In such a case, the volume descriptor section includes a PVD defined in the first format and a SVD defined in the second format. The first file system section includes a first path table consisting of information regarding a root directory of the user data, and a first root directory descriptor containing dummy information. The second file system section includes a second path table including information regarding the root directory and a subdirectory of the user data, a first root directory descriptor including information regarding the subdirectory of the user data, and a subdirectory descriptor including information regarding the user data.

The second format may further include the Rock Ridge standard, the HFS (hierarchical file system) standard, and/or the UDF standard, depending on an operating system stored in the image forming system.

In another example, the novel technique includes a method for recording a system file image onto an optical disc. Such an image recording method is preferably performed by an image processing system including an information processing apparatus and/or an optical disc apparatus.

First, the image processing system creates a system file image of user data, in a similar manner as described above. Instead of creating the system file image, the image processing system may receive a system file image from the outside via a network.

The image processing system then records the system file image and the user data onto an optical disc, preferably onto the first session of the optical disc.

In this case, the information processing system may further record additional user data onto a second session of the optical disc, preferably after closing the first session.

First, the information processing system obtains the file/directory information from the first session of the optical disc.

Next, the information processing system obtains file/directory information of the additional user data, including information regarding its directory hierarchy.

The information processing system then creates an additional system file image of the additional user data in the second session. For example, the additional system file image includes a second volume descriptor section defined in the first and second formats, and a third file system section defined in the second format.

If the first format includes the ISO 9660 and the second format includes the Joliet standard, the second volume descriptor section includes a PVD copied from the first session, and a SVD describing the file/directory information of the additional user data in the second format. The third file system section includes a third path table including information regarding a root directory and a subdirectory of the additional user data, a root directory descriptor including information regarding the subdirectory of the additional user data, and a subdirectory descriptor including information regarding the additional user data.

In addition to the first session and/or the second session, the image processing system may create a third session defined in a third format. The third format includes, for example, the HFS standard and the UDF standard.

In another example, the novel technique includes a method for reading a system file image of user data, created using the novel technique, from an optical disc. Such an image reading method is preferably performed by an image processing system including an image processing apparatus and/or an optical disc apparatus.

In addition to the above-described examples, the present invention may be applied in numerous ways, including as an image processing apparatus, an optical disc apparatus, a computer program product, and a computer readable medium storing the program product, as will be apparent to those skilled in the art, without departing from the scope and spirit of the appended claims. Further, the present invention may be implemented as a computer readable medium having a system file image of the present invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIGS. 1A to 1C are schematic diagrams illustrating an exemplary structure of an optical disc volume created in compliance with the Joliet standard, using a conventional technique;
FIG. 2 is a tree diagram illustrating an exemplary directory structure of user data stored on the optical disc volume shown in FIG. 1;
FIGS. 3A and 3B are schematic block diagrams illustrating an image processing system according to a preferred embodiment of the present invention;
FIG. 4 is a schematic diagram illustrating an optical pickup device shown in FIG. 3B;
FIG. 5 is a schematic diagram illustrating a signal processor shown in FIG. 3B;
FIG. 6 is a flowchart illustrating an exemplary operation of creating a system file image, performed by a host apparatus shown in FIG. 3A;
FIG. 7 is a tree diagram illustrating an exemplary directory structure of user data stored on the host apparatus shown in FIG. 3A;
FIGS. 8A to 8C are schematic diagrams illustrating an exemplary structure of an optical disc volume created in compliance with the Joliet standard, using a technique of the present invention;
FIG. 9 is a flowchart illustrating an exemplary operation of creating a system file image in compliance with the Joliet standard, performed by the host apparatus shown in FIG. 3A;
FIGS. 10A and 10B are flowcharts illustrating an exemplary operation of recording a system file image performed by an optical disc apparatus shown in FIG. 3B;
FIG. 11 is a flowchart illustrating an exemplary operation of adding another system file image to an optical disc, preformed by the host apparatus shown in FIG. 3A;
FIG. 12 is a tree diagram illustrating an exemplary directory structure of first user data and second user data stored on the host apparatus shown in FIG. 3A;
FIGS. 13A to 13C are schematic diagrams illustrating an exemplary structure of an optical disc volume having a multisession structure, created in compliance with the Joliet standard, using a technique of the present invention;
FIG. 14 is a flowchart illustrating an exemplary operation of creating another system file image, performed by the host apparatus shown in FIG. 3A;
FIG. 15 is a flowchart illustrating an exemplary operation of reading user data from an optical disc, created using a technique of the present invention, performed by the host apparatus shown in FIG. 3A;
FIGS. 16A and 16B are flowcharts illustrating an exemplary operation of reading user data from an optical disc, creating using a technique of the present invention, performed by the optical disc apparatus shown in FIG. 3B;
FIG. 17 is a schematic diagram illustrating an exemplary structure of an optical disc volume created in compliance with the HFS standard, using a technique of the present invention; and
FIG. 18 is a schematic diagram illustrating an exemplary structure of an optical disc volume created in compliance with the UDF standard, using a technique of the present invention.

### DETAILED DESCRIPTION OF PREFERRED EMBODIMENTS

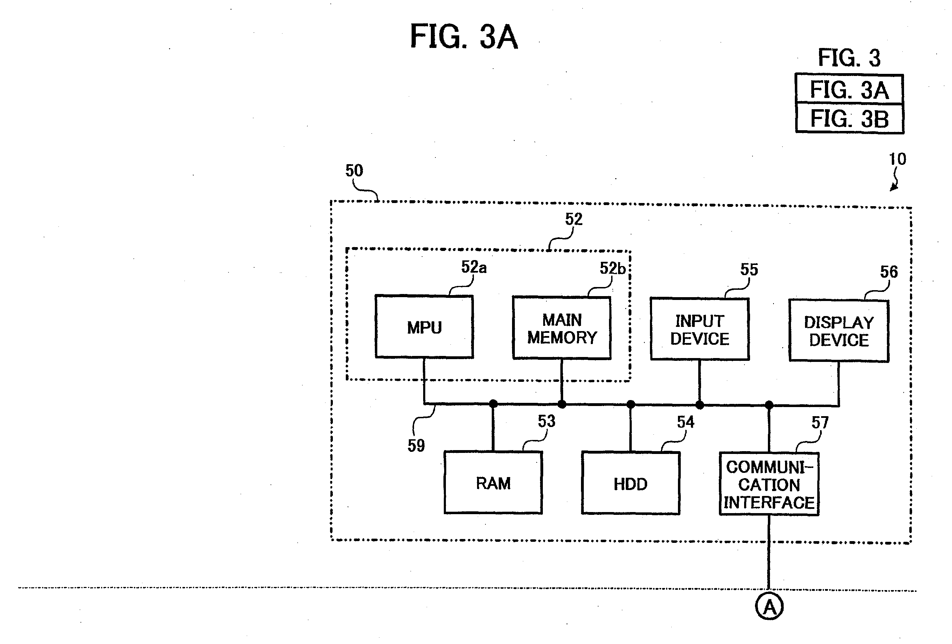

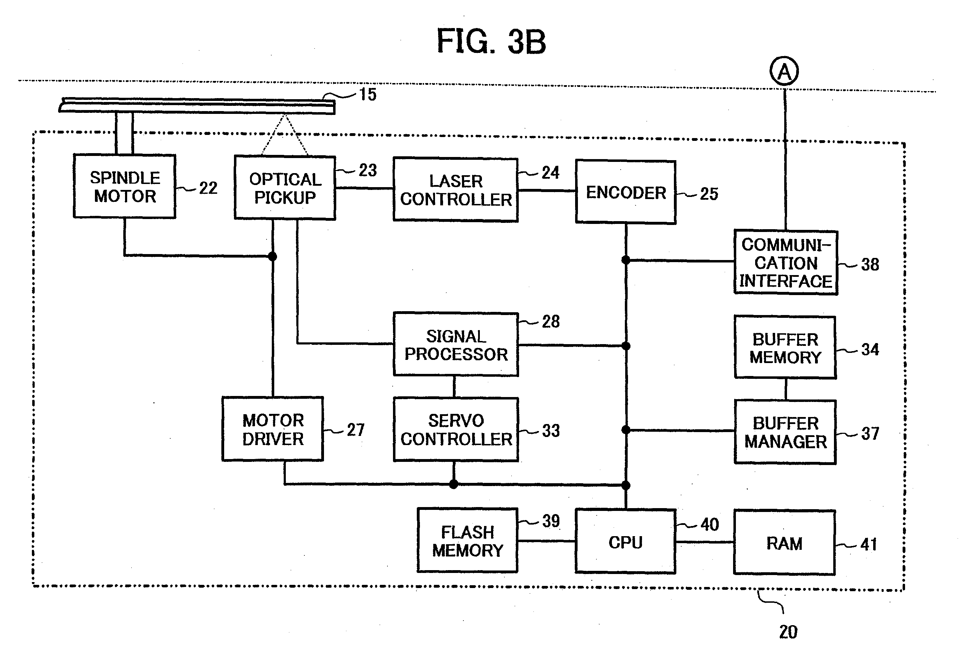

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. Referring now to the drawings, wherein like reference numerals designate identical or corresponding parts throughout the several views, particularly to FIGS. 3A and 3B, a description is made for an information processing system 10 capable of creating, writing, and reading a system file image according to a preferred embodiment of the present invention. It is to be noted that the connections shown in FIGS. 3A and 3B represent flows of signals or information, rather than the physical connections.

The information processing system 10 includes a host apparatus 50 (FIG. 3A) and an optical disc apparatus 20 (FIG. 3B). The host apparatus 50, connected to the optical disc apparatus 20, controls an entire operation of the information processing system 10.

In one example, the host apparatus 50 creates a system file image representing user data, transfers it to the optical disc apparatus 20, and causes the optical disc apparatus 20 to record it onto an optical disc 15.

In another example, the host apparatus 50 causes the optical disc apparatus 20 to read out a system file image of user data from the optical disc 15.

Referring to FIG. 3B, the optical disc apparatus 20 includes a spindle motor 22, an optical pickup device 23, a laser controller 24, an encoder 25, a motor driver 27, a signal processor 28, a servo controller 33, a buffer memory 34, a buffer manager 37, a communication interface 38, a flash memory 39, a CPU (central processing unit) 40, and a RAM (random access memory) 41.

The optical disc 15 includes any kind of optical media, such as CDs and DVDs, and it can be mounted on the optical disc apparatus 20. The optical disc 15 may be blank or may contain data.

First, a general operation and structure of the optical disc apparatus 20 is explained, which can read data from the optical disc 15 or write data onto the optical disc 15. The data includes, for example, user data and a system file image corresponding to the user data.

The spindle motor 22 causes the optical disc 15 to rotate at a predetermined speed.

To read data from or write data onto the optical disc 15, the optical pickup device 23 irradiates a laser beam onto the recording surface of the optical disc 15.

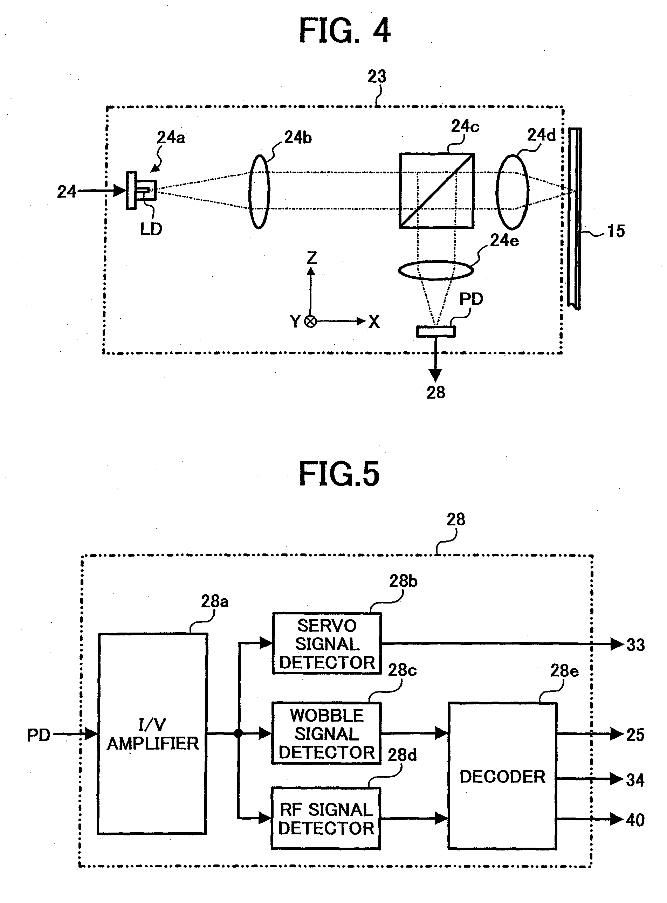

As shown in FIG. 4, the optical pickup device 23 includes a light source 24a, a collimator lens 24b, a beam splitter 24c, an objective lens 24d, a detecting lens 24e, a photodetector PD, and a driving mechanism (not shown).

The light source 24a includes a semiconductor laser LD, capable of emitting a laser beam having a wavelength ranging from 780 nm to 830 nm, preferably 780 nm, in a direction indicated as "X" in FIG. 4.

The collimator lens 24b, arranged on the right side (in the X direction) of the light source 24a, receives the light emitted from the light source 24a and forms it into a parallel light beam.

The parallel light beam then passes through the beam splitter 24c, arranged on the right side (in the X direction) of the collimated lens 24b, toward the objective lens 24d, arranged on the right side (in the X direction) of the beam splitter 24c.

The objective lens 24d condenses the parallel light and directs it toward the optical disk 15, placed substantially near the focal point of the objective lens 24d. As a result, an optical spot image is formed on the recording surface of the optical disc 15.

The objective lens 24d further condenses light reflected at the optical disc 15 and directs it toward the beam splitter 24c. The beam splitter 24c directs the reflected light toward the detecting lens 24e, arranged near the beam splitter 24c, in the direction opposite to a direction Z in FIG. 4.

The detecting lens 24e condenses the reflected light toward the photodetector PD to form an optical spot image on the light receiving surface of the photodetector PD.

The photodetector PD outputs a current signal to the signal processor 28, according to the optical spot image.

Referring to FIG. 5, the signal processor 28 includes an I/V (inverting) amplifier 28a, a servo signal detector 28b, a wobble signal detector 28c, an RF (radio frequency) signal detector 28d, and a decoder 28e.

The I/V amplifier 28a receives the current signal from the photodetector PD, and converts it to a voltage signal, after amplifying it with a predetermined gain.

The servo signal detector 28b generates servo signals, including, for example, a focusing error signal and a tracking error signal, based on the voltage signal, and outputs them to the servo controller 33 (FIG. 3B).

The wobble signal detector 28c generates a wobble signal based on the voltage signal, and output it to the decoder 28e.

The RF signal detector 28d generates an RF signal based on the voltage signal, and outputs it to the decoder 28e.

The decoder 28e extracts address information and/or synchronized information from the wobble signal. The extracted address information is output to the CPU 40 (FIG. 3B), while the extracted synchronized information is output to the encoder 25 (FIG. 3B). In addition, the decoder 28e decodes the RF signal and corrects its errors, if existed, and stores the decoded RF signal as reproduced data in the buffer memory 34 (FIG. 3B) via the buffer manager 37 (FIG. 3B). At this time, address information contained in the RF signal is also output to the CPU 40 (FIG. 3B).

Referring back to FIG. 3B, the servo controller 33, which has received the servo signals, controls the optical pickup device 23 through the driving mechanism.

For example, the servo controller 33 generates a focusing control signal based on the focusing error signal, and a tracking control signal based on the tracking error signal. These control signals are output to the motor driver 27 when the servo controller 33 is activated by the CPU 40. When the servo controller 33 is not activated, no control signals are output to the motor driver 27.

The motor driver 27 outputs a focusing driving signal to the optical pickup device 23 according to the focusing control signal. With this focusing driving signal, a focusing actuator (not shown) of the driving mechanism controls the focusing direction (in the X direction and the direction opposite to the X direction of FIG. 4) of the objective lens 24d (FIG. 4).

The motor driver 27 also outputs a tracking driving signal to the optical pickup device 23 according to the tracking control signal. With this tracking driving signal, a tracking actuator (not shown) of the driving mechanism controls the tracking direction (in the Z direction and the direction opposite to the Z direction of FIG. 4) of the objective lens 24d (FIG. 4).

In addition, the motor driver 27 outputs driving signals for driving, respectively, the spindle motor 22, and a seek motor (not shown) of the driving mechanism, according to control signals generated by the CPU 40.

The buffer memory 34 includes a data buffer area and a program variable area. The data buffer area temporarily stores data ("reproduced data") that has been read out from the optical disc 15, and data ("recorded data") to be recorded onto the optical disc 15. The program variable area stores variable data to be used by the CPU 40.

The buffer manager 37 manages the amount of data stored in the buffer memory 34, by checking input or output of data. For example, when the amount of data in the buffer memory 34 reaches a predetermined level, the buffer manager 37 notifies the CPU 40 that no more data can be stored in the buffer memory 34.

The encoder 25 reads out the recorded data accumulated in the buffer memory 34 via the buffer manager 37. After applying modulation and adding an error correction code to the recorded data, the encoder 25 generates a writing signal based on the recorded data. The writing signal is then output to the laser controller 24.

The laser controller 24 generates a driving signal for driving the semiconductor laser LD of the optical pickup device 23, according to a luminance characteristic of the semiconductor laser LD and the writing signal received from the encoder 25. In other words, the laser controller 24 controls the power of the laser beam emitted from the optical pickup device 23.

The communication interface 38 allows a two-way communication between the optical disc apparatus 20 and the host apparatus 50. The communication interface 38 may be in compliance with the ATAPI (AT Attachment Packet Interface), ATA (AT Attachment), SCSI (Small Computer System Interface), USB (Universal Serious Bus) 1.0, USB 2.0, IEEE 1394, IEEE 802.3, Serial ATA, Serial ATAPI, for example.

The flash memory 39 includes a program area and a data area. The program area stores various programs that are readable to the CPU 40, including a program for creating a system file image in the HDD 54 ("image creating program"), a program for writing a system file image onto the optical disc 15 ("image writing program"), and a program for reading a system file image from the optical disc 15 ("image reading program"). The data area stores information, including information regarding the luminance characteristic of the semiconductor laser LD, the seek operation of the optical pickup device 23, and recording conditions, for example.

The CPU 40 controls an entire operation of the optical disc apparatus 20, according to the programs stored in the program area of the flash memory 39. The CPU 40 further stores necessary data in the program variable area of the buffer memory 34 and/or the RAM 41.

Next, a general operation and structure of the host apparatus 50 is explained with reference to FIG. 3A.

The host apparatus 50 includes a main controller 52, a RAM 53, a HDD (hard disk drive) 54, an input device 55, a display device 56, and a communication interface 57.

The main controller 52 includes an MPU (main processing unit) 52a and a main memory 52b, for example, and functions as a microprocessor for controlling an entire operation of the host apparatus 50. The main controller 52 has a function of storing necessary data in the RAM 53.

The communication interface 57 allows a two-way communication between the optical disc apparatus 20 and the host apparatus 50. The communication interface 57 is preferably in compliance with the interface standard used by the communication interface 38 of FIG. 3B. Thus, it may be in compliance with the ATAPI (AT Attachment Packet Interface), ATA (AT Attachment), SCSI (Small Computer System Interface), USB (Universal Serious Bus) 1.0, USB 2.0, IEEE 1394, IEEE 802.3, Serial ATA, Serial ATAPI, for example.

The HDD 54 stores various programs, including the image creating program and the image writing program, in a format readable to the MPU 52a. The HDD 54 further stores user data.

The display device 56 includes a display (not shown), such as a CRT (cathode ray tube), LCD (liquid crystal display), PDP (plasma display panel), for example. The display device 56 displays various information output from the main controller 52.

The input device 55 includes a keyboard, mouse, tablet, tracking ball, lighting pen, and touch panel, for example. The input device 55 notifies the MPU 52a of various information input by a user. Such information may be input by wired or wireless means.

Further, the display device 56 and the input device 55 may be integrated into one device, such as a CRT with a touch panel.

As mentioned above, the optical disc apparatus 20 (FIG. 3B) can write user data stored in the host apparatus 50 onto the optical disc 15. In such a case, a system file image representing the user data is recorded onto the optical disc 15, such that the user data can be read by a wide variety of operating systems.

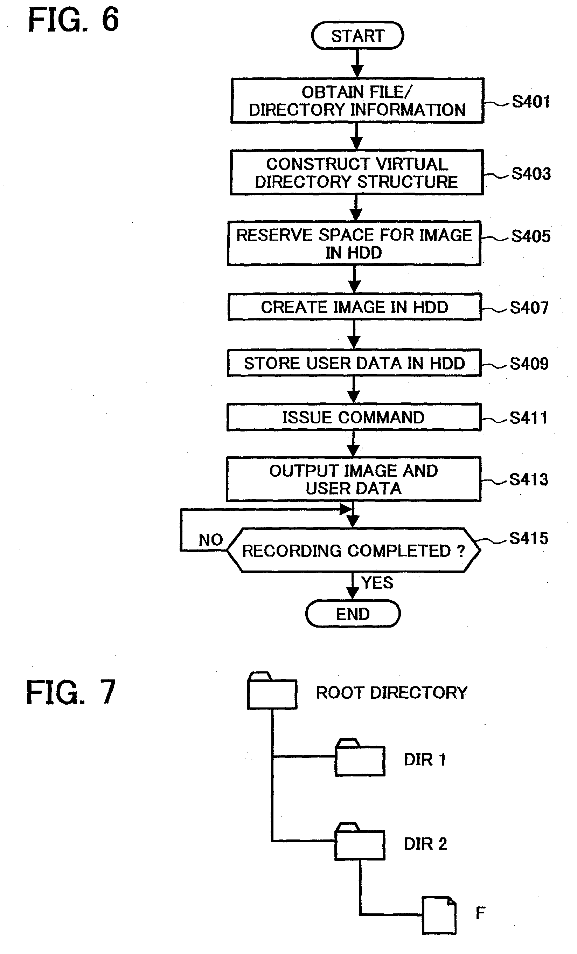

Referring now to FIG. 6, an exemplary operation performed by the host apparatus 50 of writing user data onto the optical disc 15 is explained.

In this example, the optical disc 15 contains no data, i.e., it is a blank disc. Further, the user data is previously stored in the HDD 54 as a user file F in a subdirectory DIR 2 under a root directory as shown in FIG. 7. The root directory additionally includes a subdirectory DIR 1.

The steps shown in FIG. 6 are performed by the main controller 52 according to the image creating program and the image writing program. More specifically, when a user selects the user file F stored in the HDD 54, and instructs the host apparatus 50 to write the user file F onto the optical disc 15, the image creating program and the image writing program are loaded from the HDD 54 onto the main memory 52b. At the same time, the MPU 52a starts operating according to those programs.

In Step S401, the main controller 52 obtains various kinds of information regarding the user file F (hereinafter, collectively referred to as "file/directory information"), including information regarding its format, directory hierarchy, and/or length.

In Step S403, the main controller 52 constructs a virtual directory structure in the RAM 53, using the file/directory information obtained in the previous step. The virtual directory structure corresponds to the directory hierarchy of the user file F shown in FIG. 7.

In Step S405, the main controller 52 reserves a space for a system file image in the HDD 54, according to the virtual directory structure.

In Step S407, the main controller 52 creates the system file image in the HDD 54, according to a format corresponding to at least one operating system that the user intends to use for reproducing the user file F. For example, if the user intends to use the Windows, a system file image corresponding to the Joliet standard is created. In another example, if the user intends to use the Unix or the Unix-like operating systems, such as the Linux, a system file image corresponding to the Joliet/Rock Ridge standard is created. In yet another example, if the user intends to use the Macintosh OS, a system file image corresponding to the Joliet/HFS standard is created, preferably with the Joliet/Rock Ridge support.

In Step S409, the main controller 52 stores the user file F in the HDD 54.

In Step S411, the main controller 52 issues a command to the optical disc apparatus 20, requesting the optical disc apparatus 20 to write the system file image and the user file F.

In Step S413, the main controller 52 outputs the system file image and the user file F to the optical disc apparatus 20.

In Step S415, the main controller 52 determines whether the recording is completed. If it is completed, the operation ends, otherwise, the operation repeats Step S415.

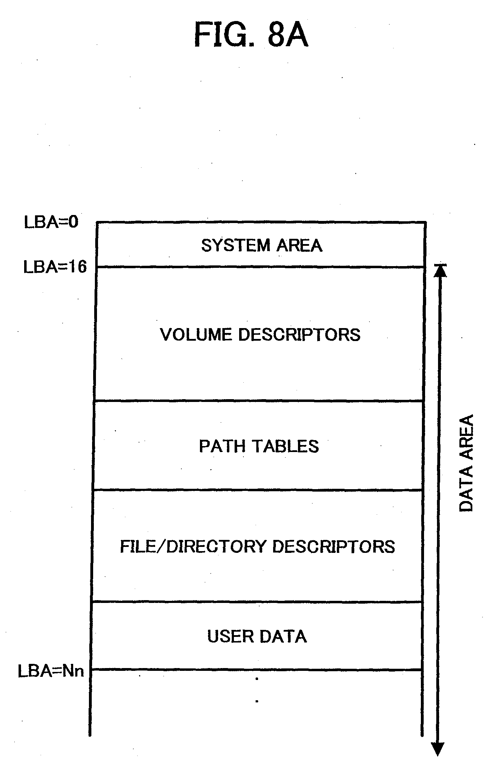

FIGS. 8A to 8C illustrate an exemplary structure of an optical disc volume of the optical disc 15. The user data, namely, the user file F is recorded onto the optical disc 15, in compliance with the Joliet standard, using the image processing system 10.

The structure shown in FIGS. 8A to 8C are substantially similar to the structure shown in FIGS. 1A to 1C, except for the contents of information stored in the group of descriptors.

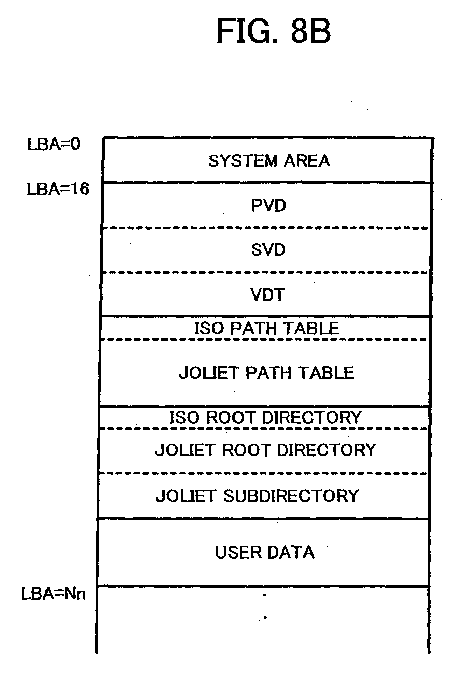

Particularly, the path tables and the file/directory descriptors shown in FIG. 8A include less amount of information than the corresponding descriptors shown in FIG. 1A. Further, the ISO path table and the ISO root directory shown in FIG. 8B include less amount of information than the corresponding descriptors shown in FIG. 1B. Furthermore, the ISO subdirectory is not included in the disc volume of FIG. 8B.

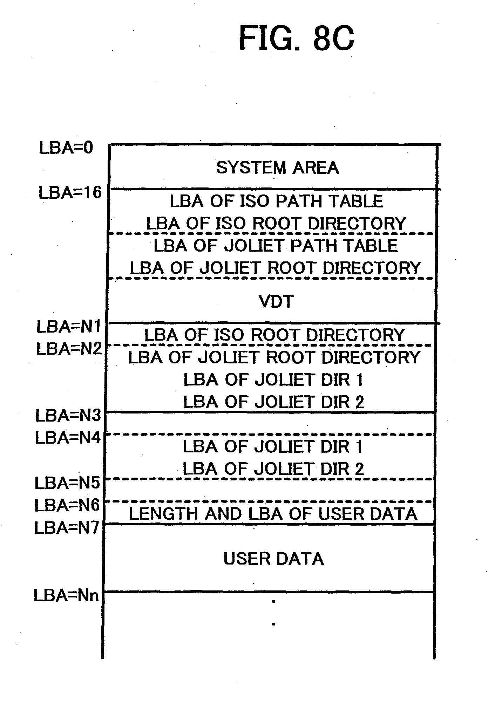

This may be better described referring to FIG. 8C.

As shown in FIG. 8C, the PVD starts at the LBA of 16. The ISO path table starts at the LBA of N1. The Joliet path table starts at the LBA of N2. The ISO root directory starts at the LBA of N3. The Joliet root directory starts at the LBA of N4. The Joliet subdirectory starts at the LBA of N5. The user data, namely, the user file F is stored at the LBA of N7.

The PVD stores the number ("N1") assigned to the LBA starting the ISO path table, as a link to the ISO path table. The PVD further stores the number ("N3") assigned to the LBA starting the ISO root directory, as a link to the ISO root directory.

The SVD stores the number ("N2") assigned to the LBA starting the Joliet path table, as a link to the Joliet path table. The SVD further stores the number ("N4") assigned to the LBA starting the Joliet root directory, as a link to the Joliet root directory.

The ISO path table stores the number ("N3") assigned to the LBA starting the ISO root directory, as a link to the ISO root directory. However, the ISO path table does not contain information regarding the ISO subdirectory.

The Joliet path table stores the number ("N4") assigned to the LBA starting the Joliet root directory, as a link to the Joliet root directory.

The Joliet path table further stores the number assigned to the LBA starting the Joliet subdirectory, as a link to the Joliet subdirectory. Particularly, in this example, the number ("N5") assigned to the LBA starting the subdirectory JOLIET DIR 1, and the number ("N6") assigned to the LBA starting the subdirectory JOLIET DIR 2 are stored.

The ISO root directory contains dummy information. The dummy information may be referred to as any kind of information having no effect on the operation, and may be expressed as "0" values.

The Joliet root directory stores the number assigned to the LBA starting the Joliet subdirectory, as a link to the Joliet subdirectory. Particularly, in this example, the number ("J5") assigned to the LBA starting the subdirectory JOLIET DIR1, and the number ("J6") assigned to the LBA starting the subdirectory JOLIET DIR2 are stored.

The subdirectory JOLIET DIR 1 stores information regarding the contents of the subdirectory JOLIET DIR 1. Particularly, it stores dummy information, having 0 values, for example.

The subdirectory JOLIET DIR 2 stores information regarding the contents of the subdirectory JOLIET DIR 2. Particularly, in this example, it stores the length of the user file F, as well as the number ("N7") assigned to the LBA starting the user file F, in compliance with the Joliet standard.

Thus, the group of descriptors shown in any one of FIGS. 8A to 8C contains less amount of space in the data area, compared to the group of descriptors shown in any one of FIGS. 1A to 1C.

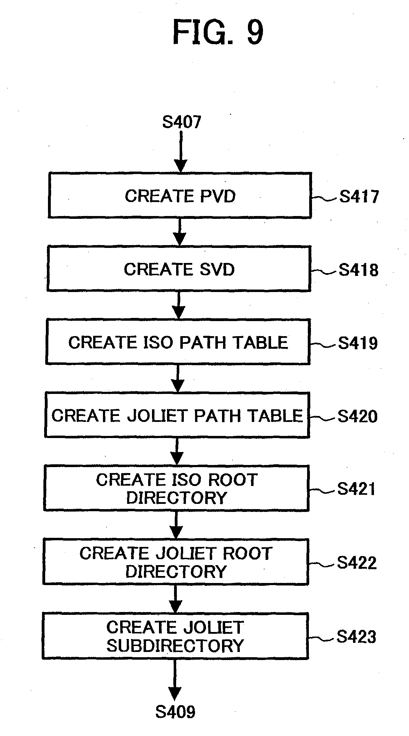

FIG. 9 illustrates an exemplary operation performed by the main controller 52 of creating a system file image corresponding to the disc volume shown in FIG. 8C.

In Step S417, which starts preferably after Step S407 of FIG. 6, the main controller 52 creates the PVD, which stores the LBA of the ISO path table and the LBA of the ISO root directory.

In Step S418, the main controller 52 creates the SVD, which stores the LBA of the Joliet path table and the LBA of the Joliet root directory.

In Step S419, the main controller 52 creates the ISO path table, which stores only information regarding the ISO root directory, including the LBA of the ISO root directory.

In Step S420, the main controller 52 creates the Joliet path table, which stores the LBA of the Joliet root directory, the LBA of the subdirectory JOLIET DIR 1, and the LBA of the subdirectory JOLIET DIR 2.

In Step S421, the main controller 52 creates the ISO root directory, containing dummy information.

In Step S422, the main controller 52 creates the Joliet root directory, which stores the LBA of the subdirectory JOLIET DIR 1, and the LBA of the subdirectory JOLIET DIR 2.

In Step S423, the main controller 52 creates the Joliet subdirectory, including the subdirectory JOLIET DIR 1 and the subdirectory JOLIET DIR 2. The subdirectory JOLIET DIR 1 stores dummy information. The subdirectory JOLIET DIR 2 stores at least the length of the user file F, as well as the LBA of the user file F. Then, the operation moves to Step S409 of FIG. 6.

In addition to the above-described case of creating a system file image defined in the Joliet standard, the present invention may be applied to other cases, including the case of creating a system file image defined in the Joliet/Rock Ridge standard and Joliet/HFS standard.

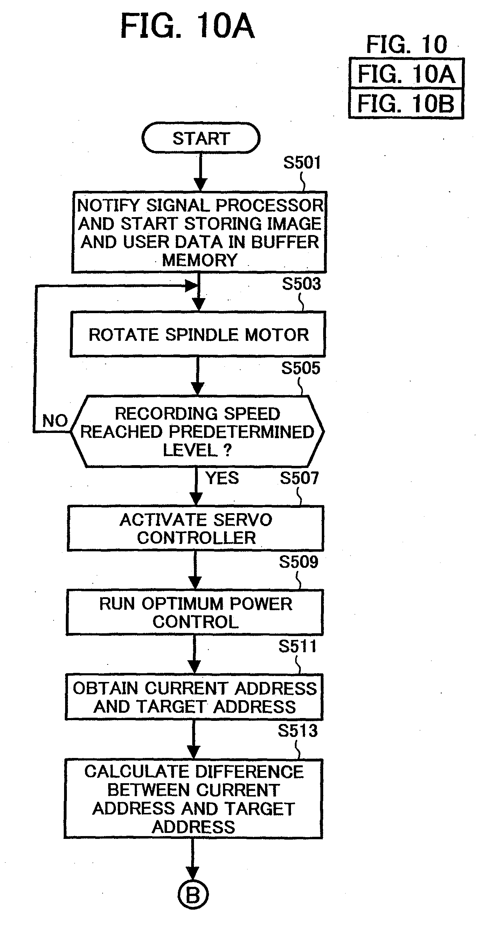

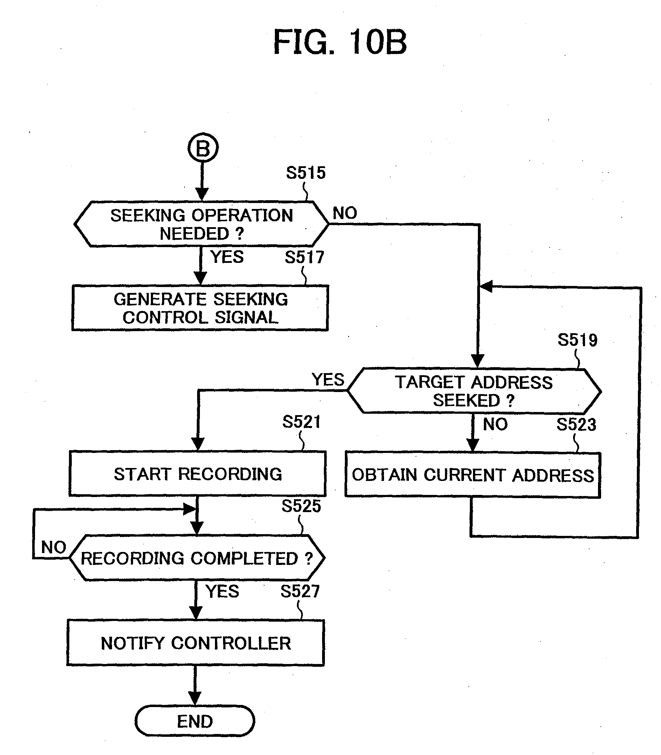

Next, a general operation performed by the optical disc apparatus 20 of recording user data is explained with reference to FIGS. 10A and 10B. In this example, the user file F is written onto the optical disc volume 20 under control of the host apparatus 50.

The steps shown in FIGS. 10A and 10B are performed by the CPU 40 according to the image writing program. More specifically, when the CPU 40 receives the command generated in Step S411 (FIG. 6) from the main controller 52, the image writing program is loaded from the flash memory 39 onto the RAM 41. At the same time, the CPU 40 starts operating according to the image writing program.

In Step S501 of FIG. 10A, the CPU 40 notifies the signal processor 28 that the command has been issued. Further, the CPU 40 instructs the buffer manager 37 to receive the system file image and the user file F and store them into the buffer memory 34.

In Step S503 of FIG. 10A, the CPU 40 generates a control signal and outputs it to the motor driver 27, as mentioned above. With the control signal, the motor driver 27 controls the rotation of the spindle motor 22. In this way, the optical disc 15 rotates at a predetermined recording speed.

In Step S505 of FIG. 10A, the CPU 40 determines whether the rotation of the optical disc 15 has reached the predetermined recording speed. If the rotation has reached the predetermined recording speed, the operation moves to Step S507, otherwise, the operation moves to Step S503 to further control the rotation of the spindle motor 22.

In Step S507 of FIG. 10A, the CPU 40 activates the servo controller 33. The servo controller 33 then controls the optical pickup device 23 through the focusing and tracking control signals, in the manner described referring to FIG. 3.

In Step S509 of FIG. 10A, the CPU 40 runs an optimum power control to determine the optimum laser power for recording. The CPU 40 may continuously run the optimum power control during the entire recording operation.

In Step S511 of FIG. 10A, the CPU 40 extracts a current address from the address information received from the decoder 28e, and a target address from the received command.

In Step S513 of FIG. 10A, the CPU 40 calculates the address difference between the current address and the target address.

In Step S515 of FIG. 10B, the CPU 40 determines whether a seeking operation is needed based on the calculated address difference. If it is determined that the seeking operation is needed, the operation moves to Step S517 of FIG. 10B, otherwise, the operation moves to Step S519 of FIG. 10B.

For example, the CPU 40 can determine the need of seeking operation by referring to a predetermined threshold value stored in the flash memory 39. If the address difference exceeds the threshold value, the CPU 40 may determine that the seeking operation is needed.

In Step S517 of FIG. 10B, the CPU 40 generates a seeking control signal to the motor driver 27, according to the address difference. With this seeking control signal, the seeking motor starts the seeking operation.

In Step S519 of FIG. 10B, the CPU 40 determines whether the current address matches with the target address. If they are matched, the operation moves to Step S521 of FIG. 10B, otherwise, the operation moves to Step S523 of FIG. 10B to obtain a current address and repeat Step S519 of FIG. 10B.

In Step S521 of FIG. 10B, the CPU 40 instructs the encoder 25 to start recording the system file image and the user data onto the optical disc 15. With this instruction, the encoder 25 starts the recording operation via the laser controller 24 and the optical pickup device 23.

In Step S525 of FIG. 10B, the CPU 40 determines whether the system file image and the user data are recorded on the optical disc 15. If it is determined that they are recorded, the operation moves to Step S527 of FIG. 10B, otherwise, the operation repeats Step S525 of FIG. 10B.

In Step S527, the CPU 40 notifies the host apparatus 50 that the recording operation has completed, and ends the recording operation of FIGS. 10A and 10B.

In the above-described example, a blank disc is used as the optical disc 15. However, the optical disc 15 may be a multisession disc having data previously stored.

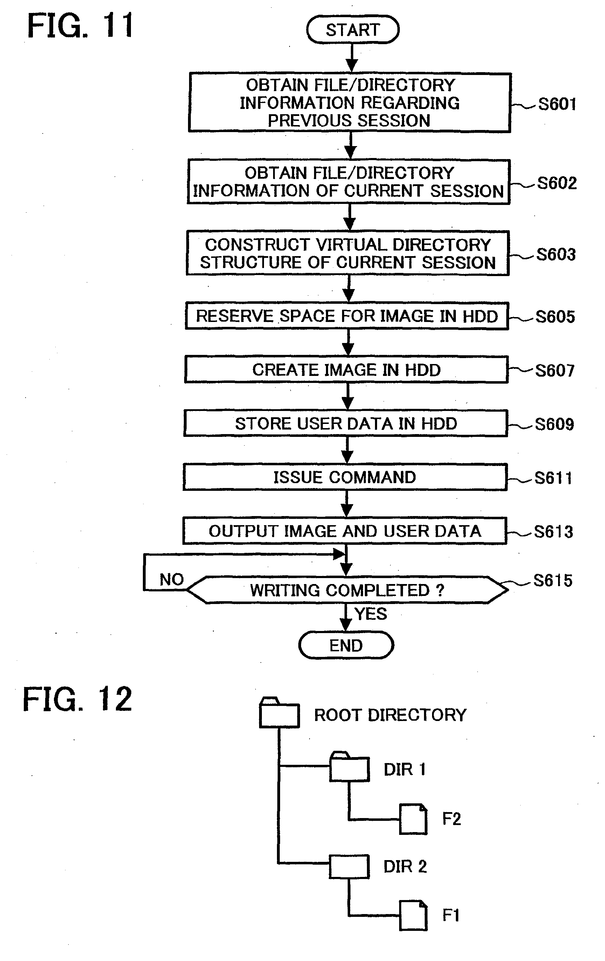

FIG. 11 illustrates an exemplary operation of writing additional user data onto the optical disc 15. In this example, the optical disc 15 is a multisession disc containing user data in its first session, particularly, a first user file F1 having a directory hierarchy shown in FIG. 12. Further, the user data to be added is referred to as a second user file F2, having a directory hierarchy shown in FIG. 12.

The steps shown in FIG. 11 are performed by the main controller 52 according to the image creating program and the image writing program. More specifically, when the user selects the second user file F2 stored in the HDD 54, and instructs the host apparatus 50 to write the second user file F2 onto the second session of the optical disc 15, the image creating program and the image writing program are loaded from the HDD 54 onto the main memory 52b. At the same time, the MPU 52a starts operating according to those programs.

In Step S601, the main controller 52 obtains file/directory information of the first user file F1. Such file/directory information may be read out from the first session of the optical disc 15.

In Step S602, the main controller 52 obtains file/directory information of the second user file F2, from the HDD 54.

In Step S603, the main controller 52 constructs a virtual directory structure in the RAM 53, using the file/directory information regarding the second user file F2, obtained in the previous step. The virtual directory structure corresponds to the directory hierarchy shown in FIG. 12.

In Step S605, the main controller 52 reserves a space for a system file image in the HDD 54, according to the virtual directory structure.

In Step S607, the main controller 52 creates the system file image in the HDD 54, according to a format corresponding to at least one operating system that the user intends to use, in a substantially similar manner described referring to Step S407. The format selected in this step for the second session does not have to match with a format used in the first session, as long as the both formats comply requirements of the ISO standard.

In Step S609, the main controller 52 stores the second user file F2 in the HDD 54.

In Step S611, the main controller 52 issues a command to the optical disc apparatus 20, requesting the optical disc apparatus 20 to write the system file image and the second user file F2.

In Step S613, the main controller 52 outputs the system file image and the second user file F2 to the optical disc apparatus 20.

In Step S615, the main controller 52 determines whether the recording is completed. If it is completed, the operation ends, otherwise, the operation repeats Step S613.

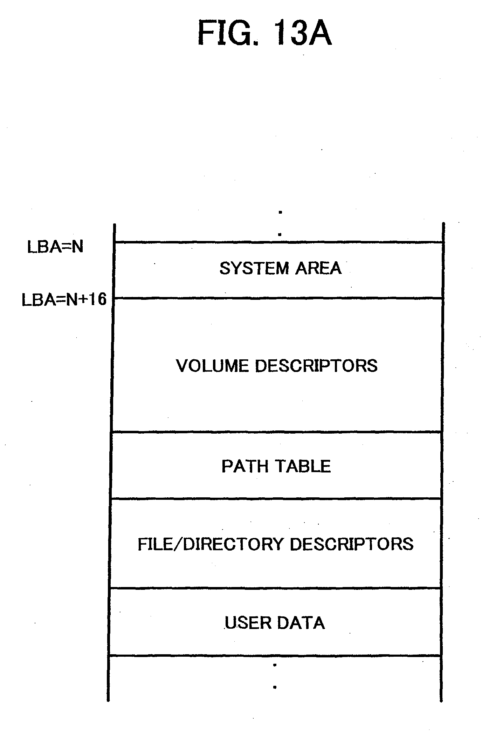

FIGS. 13A to 13C illustrate an exemplary structure of an optical disc volume of the optical disc 15. The user data, namely the user file F2 is additionally recorded onto the optical disc 15, in compliance with the Joliet standard, after closing of the first session containing the user file F1, using the image processing system 10.

As shown in FIG. 13A, the disc volume includes a system area and a data area. The system area starts at the LBA of N, which represents the end of the first session. The data area starts at the LBA of N+16, and includes volume descriptors, path tables, and file/directory descriptors. The data area further stores the actual user data, i.e., the user file F2.

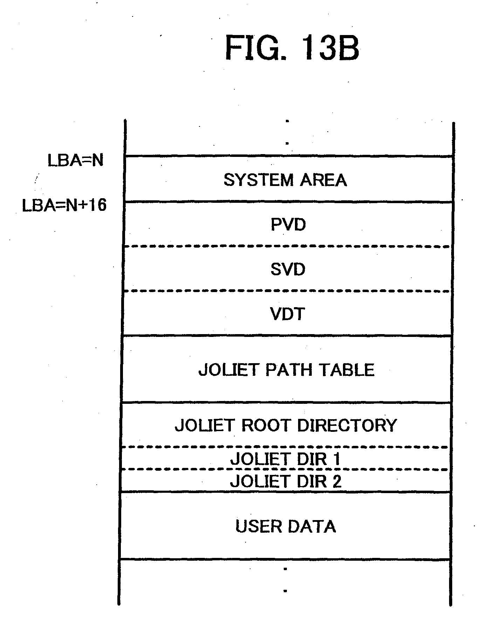

Referring to FIG. 13B, the volume descriptors include a PVD, a SVD, and a VDT. The path tables include a path table defined in the Joliet standard ("Joliet path table"). The file/directory descriptors include a root directory descriptor defined in the Joliet standard ("Joliet root directory"), and a subdirectory descriptor defined in the Joliet standard ("Joliet subdirectory").

Referring to FIG. 11C, the PVD starts at the LBA of N+16. The Joliet root directory starts at the LBA of N11. The Joliet path table starts at the LBA of N12. The Joliet subdirectory starts at the LBA of N13.

The PVD copies contents of information from the PVD of the first session of the optical disc 15.

For example, since the hierarchy structure of the user file F1 shown in FIG. 12 is identical to that of the hierarchy structure of the user file F shown in FIG. 7, the first session may contain information substantially similar to the one shown in FIG. 8C. In other words, the PVD of the first session stores the number ("N1") assigned to the LBA starting the ISO path table of the first session, as a link to the ISO path table of the first session. The PVD of the first session further stores the LBA ("N3") assigned to the LBA starting the ISO root directory, as a link to the ISO root directory of the first session. Thus, the PVD of the second session may be created by copying such information stored in the PVD of the first session.

The SVD stores the number ("N11") assigned to the LBA starting the Joliet path table, as a link to the Joliet path table. The SVD further stores the number ("N12") assigned to the LBA starting the Joliet root directory, as a link to the Joliet root directory.

The Joliet path table stores the number ("N12") assigned to the LBA starting the Joliet root directory. The Joliet path table further stores the number assigned to the LBA starting the Joliet subdirectory. In this example, the number ("N13") assigned to the LBA starting the subdirectory DIR1 defined in the Joliet standard ("JOLIET DIR 1"), and the number ("N14") assigned to the LBA starting the subdirectory DIR2 defined in the Joliet standard ("JOLIET DIR 2") are stored.

The Joliet root directory stores the number assigned to the LBA starting the Joliet subdirectory, as a link to the Joliet subdirectory. Particularly, in this example, the number ("N13") assigned to the LBA starting the subdirectory JOLIET DIR1, and the number ("N14") assigned to the LBA starting the subdirectory JOLIET DIR2 are stored.

The subdirectory JOLIET DIR 1 stores the length of the user file F1, as well as the number ("N7" in FIG. 8C, for example) assigned to the LBA starting the user file F1, in compliance with the Joliet standard. Such information may be obtained by referring to the first session of the optical disc 15.

The subdirectory JOLIET DIR 2 stores the length of the user file F2, as well as the number ("N15") assigned to the LBA starting the user file F2, in compliance with the Joliet standard.

Thus, the group of descriptors shown in any one of FIGS. 13A to 13C contains less amount of space in the data area, when compared to the group of the descriptors shown in any one of FIGS. 1A to 1C.

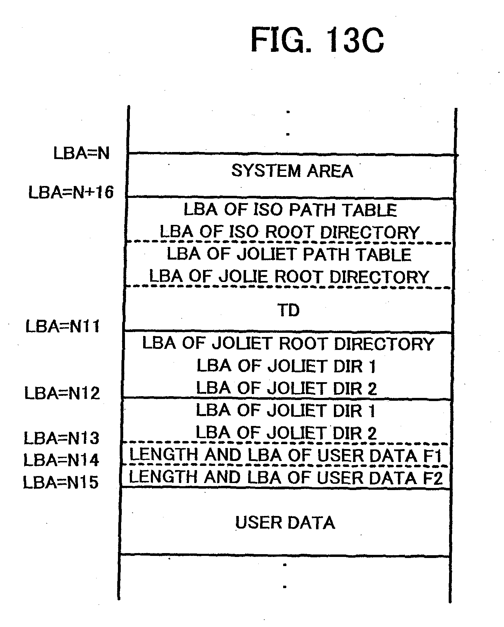

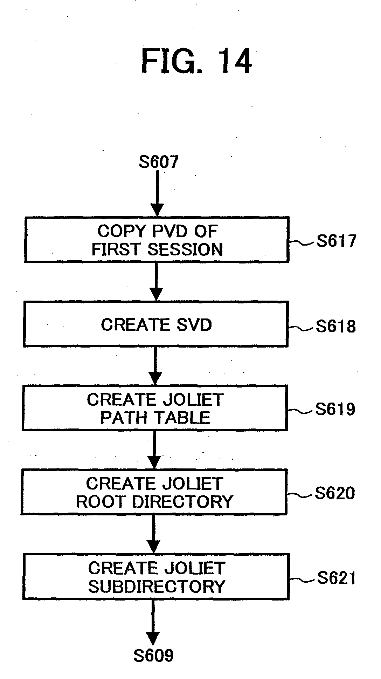

FIG. 14 illustrates an exemplary operation performed by the main controller 52 of creating a system file image corresponding to the disc volume shown in FIG. 13C.

In Step S617, which starts preferably after Step S607 of FIG. 11, the main controller 52 copies the PVD of the first session from the optical disc 15.

In Step S618, the main controller 52 creates the SVD, which stores the LBA of the Joliet path table and the LBA of the Joliet root directory.

In Step S619, the main controller 52 creates the Joliet path table, which stores the LBA of the Joliet root directory, the LBA of the subdirectory JOLIET DIR 1, and the LBA of the subdirectory JOLIET DIR 2.

In Step S621, the main controller 52 creates the Joliet root directory, which stores the LBA of the subdirectory JOLIET DIR 1, and the LBA of the subdirectory JOLIET DIR 2.

In Step S623, the main controller 52 creates the Joliet subdirectory, including the subdirectory JOLIET DIR 1 and the subdirectory JOLIET DIR 2. The subdirectory JOLIET DIR 1 stores at least the length of the user file F1 as well as the LBA of the user file F1. The subdirectory JOLIET DIR 2 stores at least the length of the user file F2 as well as the LBA Of the user file F2.

In addition to the above-described case of creating a system file image defined in the Joliet standard, the present invention may be applied to other cases, including the case of creating a system file image defined in the Joliet/Rock Ridge standard and Joliet/HDF standard.

The system file image created by the host apparatus 50 may be recorded onto the optical disc 15 by the optical disc apparatus 20, in a manner substantially similar to the one shown in FIGS. 10A and 10B.

In addition to creating and recording a system file image, the information processing system 10 may read a system file image from the optical disc 15.

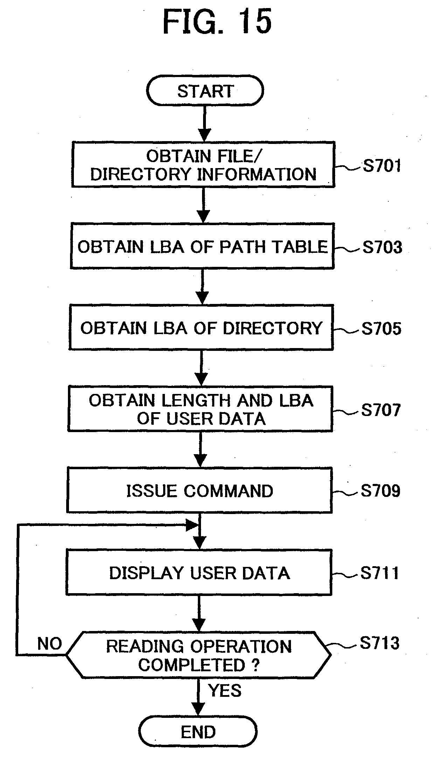

FIG. 15 illustrates an exemplary operation performed by the host apparatus 50 of reading user data from the optical disc 15.

In this example, the host apparatus 50 reads the user file F1 from the optical disc 15, containing the user file F1 and the user file F2, in the directory hierarchy shown in FIG. 12. In other words, the optical disc 15 contains a disc volume having the structure shown in any one of FIGS. 13A to 13C. Further, the host apparatus 50 operates under the operating system, capable of reading the Joliet standard.

The steps shown in FIG. 15 are performed by the main controller 52 according to the image reading program. More specifically, when a user selects the user file F1 stored in the HDD 54, and instructs the host apparatus 50 to read the user file F1 from the optical disc 15, the image reading program is loaded from the HDD 54 onto the main memory 52b. At the same time, the MPU 52a starts operating according to those programs.

In Step S701, the main controller 52 obtains the file/directory information of the user file F1 from the optical disc 15.

In Step S703, the main controller 52 extracts the LBA ("N11" in FIG. 13C) of the Joliet path table from the SVD of the second session.

In Step S705, the main controller 52 extracts the LBA ("N13" in FIG. 13C) of the subdirectory JOLIET DIR 1, which includes the user file F1, from the Joliet path table.

In Step S707, the main controller 52 extracts the length of the user file F1 and the LBA ("N7" in FIG. 8C) of the user file F1, from the subdirectory JOLIET DIR 1.

In Step S709, the main controller 52 issues a command to the optical disc apparatus 20 of requesting the optical disc apparatus 20 to reproduce the user file F1.

In Step S711, the main controller 52 displays the user file F1 on the display device 56.

In Step S713, the main controller 52 determines whether the reading operation has been completed. If it is completed, the operation ends, otherwise, the operation goes back to Step S711.

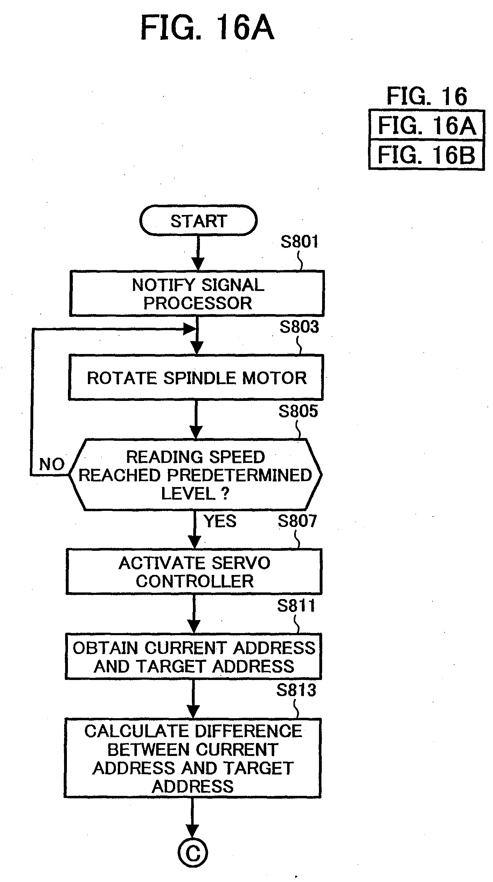

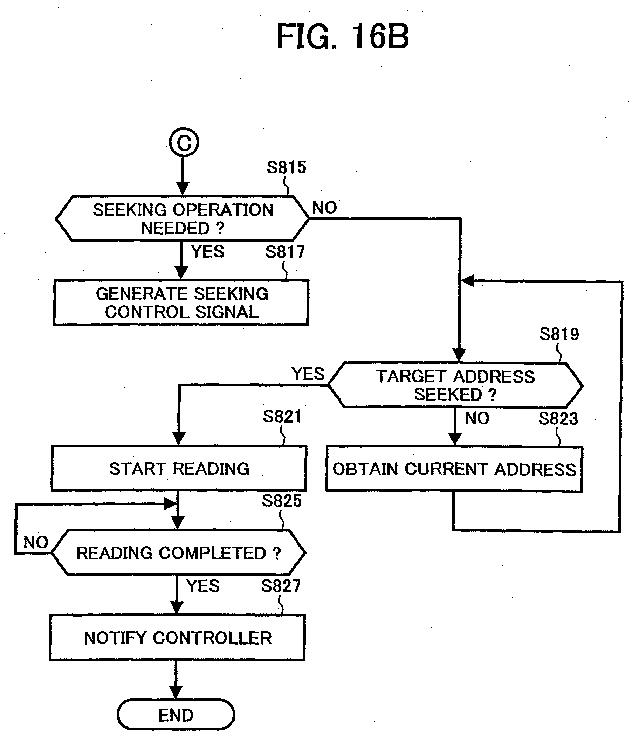

Next, a general operation performed by the optical disc apparatus 20 of reading the user file F1 is explained with reference to FIGS. 16A and 16B.

The steps shown in FIGS. 16A and 16B are performed by the CPU 40 according to the image reading program. More specifically, when the CPU 40 receives the command generated in Step S709 (FIG. 15) from the main controller 52, the image reading program is loaded from the flash memory 39 onto the RAM 41. At the same time, the CPU 40 starts operating according to the image reading program.

In Step S801 of FIG. 16A, the CPU 40 notifies the signal processor 28 that the command has been issued.

In Step S803 of FIG. 16A, the CPU 40 generates a control signal and outputs it to the motor driver 27. With the control signal, the motor driver 27 controls the rotation of the spindle motor 22. In this way, the optical disc 15 rotates at a predetermined reading speed.

In Step S805 of FIG. 16A, the CPU 40 determines whether the rotation of the optical disc 15 has reached the predetermined reading speed. If the rotation has reached the predetermined reading speed, the operation moves to Step S807, otherwise, the operation moves to Step S803 to further control the rotation of the spindle motor 22.

In Step S807 of FIG. 16A, the CPU 40 activates the servo controller 33. The servo controller 33 then controls the optical pickup device 23 through the focusing and tracking control signals, in the manner described referring to FIG. 3.

In Step S811 of FIG. 16A, the CPU 40 extracts a current address from the address information received from the decoder 28e, and a target address from the received command.

In Step S813 of FIG. 16A, the CPU 40 calculates the address difference between the current address and the target address.

In Step S815 of FIG. 16B, the CPU 40 determines whether a seeking operation is needed based on the calculated address difference. If it is determined that the seeking operation is needed, the operation moves to Step S817 of FIG. 16B, otherwise, the operation moves to Step S819 of FIG. 16B. The determination may be made in a similar manner as descried referring to Step S515 of FIG. 10B.

In Step S817 of FIG. 16B, the CPU 40 generates a seeking control signal to the motor driver 27, according to the address difference. With this seeking control signal, the seeking motor starts the seeking operation.

In Step S819 of FIG. 16B, the CPU 40 determines whether the current address matches with the target address. If they are matched, the operation moves to Step S821 of FIG. 16B, otherwise, the operation moves to Step S823 of FIG. 16B to obtain a current address and repeat Step S819 of FIG. 16B.

In Step S821 of FIG. 16B, the CPU 40 instructs the signal processor 28 to start reproducing the user data, i.e., the user file F1, stored on the optical disc 15. With this instruction, the signal processor 28 starts the reading operation and stores the read data onto the buffer memory 34. At the same time, the buffer memory 34 transfers the received data, sector by sector, to the host apparatus 50 via the communication interface 38.

In Step S825 of FIG. 16B, the CPU 40 determines whether all the user data has been read from the optical disc 15. If it is determined that it has been read, the operation moves to Step S827 of FIG. 16B, otherwise, the operation repeats Step S825 of FIG. 16B.

In Step S827, the CPU 40 notifies the host apparatus 50 that the reading operation has completed, and ends the reading operation of FIGS. 16A and 16B.

Even if the operating system of the host apparatus 50 does not support the Joliet standard, the image processing system 10 can still read the user file F1, using the ISO standard. In such a case, necessary information is added to the group of descriptors defined in the ISO standard.

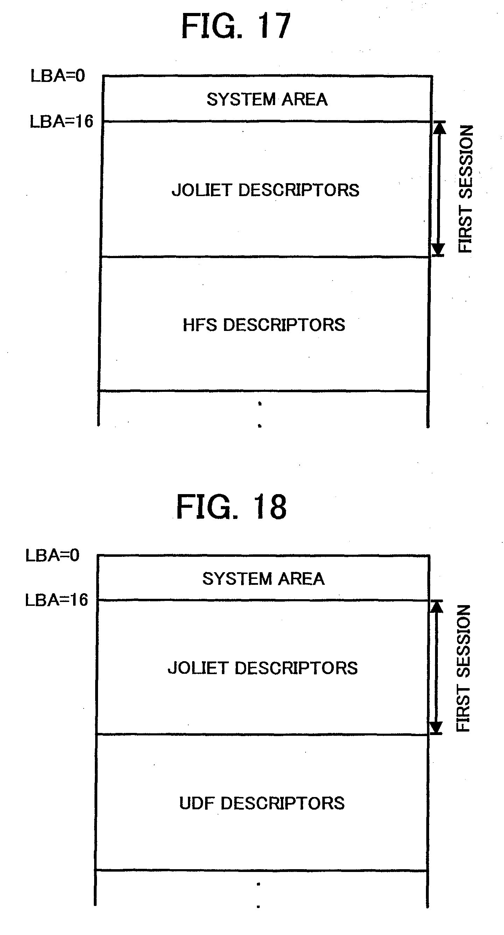

In another example, if the optical disc 15 is written in the Joliet/HFS standard, and the Macintosh operating system is used for reading the user file F1, the host apparatus 50 refers to the group of descriptors defined in the HFS standard, by using a pointer stored in the system area, as shown in FIG. 17. The HFS specification is hereby incorporated by reference.

In this case, the group of descriptors defined in the Joliet standard is stored preferably in the first session.

In another example, if the optical disc 15 is a DVD written in the Joliet/UDF standard, and the operating system capable of reading the UDF standard is used for reading the user file F1, the host apparatus 50 refers to the group of descriptors defined in the UDF standard, by using a pointer stored in the system area, as shown in FIG. 18. The UDF specification is hereby incorporated by reference.

In this case, the group of descriptors defined in the Joliet standard is stored preferably in the first session.

Numerous additional modifications and variations are possible in light of the above teachings. It is therefore to be understood that within the scope of the appended claims, the disclosure of this patent specification may be practiced otherwise than as specifically described herein.

For example, any one of the image creating, image writing, and image reading programs may be stored in any kind of storage device, including optical discs, magneto optical discs, memory card, flexible discs, etc. Further, any one of the above programs may be downloaded from another storage device via a network, including an LAN, an intranet, the Internet, etc.

The optical discs may include, for example, a hybrid disc including a RAM section and a ROM section. If the hybrid disc is used as the storage device, any one of the programs may be written in the ROM section. In such a case, user data and the corresponding system file image may be written in the ROM section.

Furthermore, it is not required for the image processing system 10 to perform all the functions including creating, writing, and reading. The image processing system 10 needs to perform at least one of the described functions. Further, the structures and operations described referring to the image processing system 10 are provided for the descriptive purpose. Thus, different structures and different operations may be applied to the image processing system 10, as will be apparent to those skilled in the art, within the scope of this disclosure and appended claims.

This patent specification is based on Japanese patent application, No. JPAP2003-332952 filed on September 25, 2003, in the Japanese Patent Office, the entire contents of which are incorporated by reference herein.

## Claims

1. An image processing apparatus, comprising:
a processor; and
a storage device configured to store user data organized in a directory hierarchy and a plurality of instructions which, when executed by the processor, causes the processor to perform an operation including:
obtaining file/directory information including information regarding the directory hierarchy of the user data from the storage device;
creating a volume descriptor section based on the file/directory information;
creating a first file system section based on the file/directory information in a first format;
creating a second file system section based on the file/directory information in a second format, having a length larger than a length of the first file system section; and
generating a system file image of the user data, including the volume descriptor section, the first file system section, and the second file system section, in the storage device.

2. The image processing apparatus of Claim 1, further comprising:
an input device configured to allow a user to input a command; and
a display device configured to display information including the system file image and the user data.

3. The image processing apparatus of Claim 2, further comprising:
a communication interface configured to allow the information processing apparatus to communicate with other apparatus via a network.

4. The image processing apparatus of Claim 1, wherein the first format includes the ISO 9660 standard.

5. The image processing apparatus of Claim 4, wherein the volume descriptor section comprises:
a primary volume descriptor configured to describe the first file system section in the first format; and
a volume descriptor set terminator configured to end the volume descriptor section.

6. The image processing apparatus of Claim 5, wherein the second format includes the Joliet standard.

7. The image processing apparatus of Claim 6, wherein the volume descriptor section further comprises:
at least one supplementary volume descriptor configured to describe the second file system section in the second format.

8. The information processing apparatus of Claim 7, wherein the directory hierarchy comprises:
a root directory; and
at least one subdirectory located under the root directory, including a subdirectory having the user data.

9. The information processing apparatus of Claim 8, wherein the first file system section comprises:
a first path table consisting of information regarding the root directory; and
a first root directory descriptor including dummy information.

10. The information processing apparatus of Claim 9, wherein the second file system section comprises:
a second path table including information regarding the root directory and information regarding the subdirectory;
a second root directory descriptor including information regarding the subdirectory; and
a subdirectory descriptor including information regarding the user data.

11. The information processing apparatus of Claim 5, wherein the operation further includes:
mounting an optical disc;
recording the system file image and the user data onto a first session of the optical disc via the network; and
closing the first session.

12. The information processing apparatus of Claim 11, wherein the operation further includes:
reading at least one of the system file image and the user data from the optical disc via the network.

13. The information processing apparatus of Claim 12, wherein the operation further includes:
storing additional user data organized in a directory hierarchy in the storage device;
obtaining the file/directory information of the user data from the first session of the optical disc; and
obtaining additional file/directory information including information regarding the directory hierarchy of the additional user data from the storage device.

14. The information processing apparatus of Claim 13, wherein the operation further includes:
creating a primary volume descriptor for a second session, using the file/directory information of the user data.

15. The information processing apparatus of Claim 14, wherein the second format includes the Joliet standard.

16. The information processing apparatus of Claim 15, wherein the operation further includes:
creating a supplementary volume descriptor in the second format;
creating a file system section based on the additional file/directory information of the additional user data in the second format; and
generating an additional system file image, including the primary volume descriptor, the supplementary volume descriptor, and the file system section.

17. The information processing apparatus of Claim 16, wherein the operation further includes:
recording the additional system file image and the additional user data onto the second session of the optical disc.

18. The information processing apparatus of Claim 17, wherein the operation further includes:
reading at least one of the system file image, the user data, the additional system file image, and the additional user data, from the optical disc.

19. The information processing apparatus of Claim 4, wherein the operation further includes:
mounting an optical disc having at least a first session and a second session;
recording the system file image and the user data onto the first session of the optical disc; and
creating a third file system section for the second session in a third format.

20. The image processing apparatus of Claim 19, wherein the operation further includes:
recording the third file system section onto the second session of the optical disc.

21. The image processing apparatus of Claim 20, wherein the operation further includes:
reading the third file system section from the optical disc.

22. An optical disc apparatus, comprising:
a motor configured to rotate an optical disc in a predetermined speed;
a lighting device configured to emit a light to the optical disc;
a light controller configured to control a direction and an amount of the light of the lighting device;
a signal processor configured to process data including recorded data to be written onto the optical disc and reproduced data read from the optical disc;
a main processor configured to control the light controller and the signal processor; and
a storage device configured to store a plurality of instructions which, when executed by the main processor, causes the main processor to perform an operation including:
driving the motor at the predetermined speed;
storing user data organized in a directory hierarchy in the storage device;
obtaining file/directory information including information regarding the directory hierarchy of the user data from the storage device;
emitting a light onto a first session of the optical disc, according to the file/directory information;
forming a volume descriptor section based on the file/directory information on the first session of the optical disc;
forming a first file system section based on the file/directory information in a first format on the first session of the optical disc;
forming a second file system section based on the file/directory information in a second format, having a length larger than a length of the first file system section, on the first session of the optical disc; and
recording the user data on the first session of the optical disc.

23. The optical disc apparatus of Claim 22, further comprising:
a communication interface configured to allow the optical disc apparatus to communicate with other apparatus via a network.

24. The optical disc apparatus of Claim 22, wherein the first format includes the ISO 9660 standard.

25. The optical disc apparatus of Claim 24, wherein the volume descriptor section comprises:
a primary volume descriptor configured to describe the first file system section in the first format; and
a volume descriptor set terminator configured to end the volume descriptor section.

26. The optical disc apparatus of Claim 25, wherein the second format includes the Joliet standard.

27. The optical disc apparatus of Claim 26, wherein the volume descriptor section further comprises:
at least one supplementary volume descriptor configured to describe the second file system section in the second format.

28. The optical disc apparatus of Claim 27, wherein the directory hierarchy comprises:
a root directory; and
at least one subdirectory located under the root directory, including a subdirectory having the user data.

29. The optical disc apparatus of Claim 28, wherein the first file system section comprises:
a first path table consisting of information regarding the root directory; and
a first root directory descriptor including dummy information.

30. The optical disc apparatus of Claim 29, wherein the second file system section comprises:
a second path table including information regarding the root directory and information regarding the subdirectory;
a second root directory descriptor including information regarding the subdirectory; and
a subdirectory descriptor including information regarding the user data.

31. The optical disc apparatus of Claim 30, wherein the operation further includes:
closing the first session of the optical disc.

32. The optical disc apparatus of Claim 31, wherein the operation further includes:
reading at least one of the system file image and the user data from the optical disc.

33. The optical disc apparatus of Claim 25, wherein the operation further includes:
storing additional user data organized in a directory hierarchy in the storage device;
obtaining the file/directory information of the user data from the first session;
obtaining additional file/directory information including information regarding the directory hierarchy of the additional user data from the storage device; and
forming a second primary volume descriptor on a second session, using the file/directory information of the user data.

34. The optical disc apparatus of Claim 33, wherein the second format includes the Joliet standard.

35. The optical disc apparatus of Claim 34, wherein the operation further includes:
forming a supplementary volume descriptor defined in the second format on the second session; and
forming a file system section based on the additional file/directory information of the additional user data in the second format on the second session; and
recording the additional user data on the second session of the optical disc.

36. The optical disc apparatus of Claim 35, wherein the operation further includes:
reading at least one of the system file image, the user data, the additional system file image, and the additional user data, from the optical disc.

37. The optical disc apparatus of Claim 30, wherein the operation further includes:
forming a third file system section in a third format on a second session of the optical disc.

38. The optical disc apparatus of Claim 37, wherein the operation further includes:
reading the third file system section from the optical disc.

39. An information processing method, comprising the steps of:
storing user data in a directory hierarchy;
obtaining file/directory information including information regarding the directory hierarchy of the user data;
creating a volume descriptor section based on the file/directory information;
creating a first file system section based on the file/directory information in a first format;
creating a second file system section based on the file/directory information in a second format, having a length larger than a length of the first file system section; and
generating a system file image of the user data, including the volume descriptor section, the first file system section, and the second file system section.

40. The method of Claim 39, wherein the directory hierarchy comprises:
a root directory; and
at least one subdirectory located under the root directory, including a subdirectory having the user data.

41. The method of Claim 40, wherein the first file system section comprises:
a first path table consisting of information regarding the root directory; and
a first root directory descriptor including dummy information.

42. The method of Claim 41, wherein the first format includes the ISO 9660 standard.

43. The method of Claim 42, wherein the second format includes the Joliet standard.

44. The method of Claim 41, further comprising the steps of:
mounting an optical disc;
recording the system file system image and the user data onto a first session of the optical disc; and
closing the first session.

45. The method of Claim 44, further comprising the step of:
reading at least one of the system file image and the user data from the first session of the optical disc.

46. The method of Claim 45, further comprising the step of:
storing the at least one of the system file image and the user data.

47. The method of Claim 46, further comprising the step of:
displaying the at least one of the system file image and the user data.

48. The method of Claim 44, further comprising the steps of:
storing additional user data in a directory hierarchy;
obtaining the file/directory information of the user data from the first session of the optical disc; and
obtaining additional file/directory information including information regarding the directory hierarchy of the additional user data.

49. The method of Claim 48, further comprising the step of:
creating a primary volume descriptor for a second session, using the file/directory information of the user data.

50. The method of Claim 49, further comprising the steps of:
creating a supplementary volume descriptor defined in the second format;
creating a file system section based on the additional file/directory information of the additional user data in the second format; and
generating an additional system file image, including the primary volume descriptor, the supplementary volume descriptor, and the file system section.

51. The method of Claim 50, further comprising the step of:
forming the additional system file image and the additional user data on the second session of the optical disc.

52. The method of Claim 51, further comprising the step of:
reading at least one of the system file image, the user data, the additional system file image, and the additional user data, from the optical disc.

53. The method of Claim 52, further comprising the step of:
displaying the at least one of the system file image, the user data, the additional system file image, and the additional user data.

54. The method of Claim 44, further comprising the step of:
creating a third file system section defined in a third format.

55. The method of Claim 54, further comprising the step of:
forming the third file system section on a second session of the optical disc.

56. The method of Claim 55, further comprising the step of:
reading the third file system section from the optical disc.

57. The method of Claim 56, further comprising the step of:
displaying the third file system section.

58. An image processing system, comprising:
a host apparatus;
an optical disc apparatus having an optical disc, connected to the host apparatus via a network; and
a storage device configured to store user data organized in a directory hierarchy and a plurality of instructions which, when executed by the host apparatus, causes at least one of the host apparatus and the optical disc apparatus to perform an operation including:
obtaining file/directory information including information regarding the directory hierarchy of the user data from the storage device;
creating a volume descriptor section based on the file/directory information;
creating a first file system section based on the file/directory information in a first format;
creating a second file system section based on the file/directory information in a second format, having a length larger than a length of the first file system section; and
generating a system file image of the user data, including the volume descriptor section, the first file system section, and the second file system section, in the storage device.

59. The system of Claim 58, wherein the operation further includes:
transferring the system file image and the user data to the optical disc apparatus;
recording the system file image and the user data onto a first session of the optical disc; and
closing the first session.

60. The system of Claim 59, wherein the operation further includes:
reading at least one of the system file image and the user data from the optical disc.

61. The system of Claim 60, wherein the operation further includes:
storing the at least one of the system file image and the user data in the storage device; and
displaying the at least one of the system file image and the user data to the host apparatus.

62. The system of Claim 59, wherein the operation further includes:
storing additional user data organized in a directory hierarchy in the storage device;
obtaining the file/directory information of the user data from the first session; and
obtaining additional file/directory information including information regarding the directory hierarchy of the additional user data from the storage device.

63. The system of Claim 62, wherein the operation further includes:
creating an additional volume descriptor section in the first format, using the file/directory information of the user data;
creating a third file system section based on the additional file/directory information in the second format; and
generating an additional system file image of the additional user data, including the additional volume descriptor section and the third file system section, in the storage device.

64. The system of Claim 63, wherein the operation further includes:
transferring the additional system file image and the additional user data to the optical disc apparatus;
recording the additional system file image and the additional user data onto a second session of the optical disc; and
closing the second session.

65. The system of Claim 64, wherein the operation further includes:
reading at least one of the system file image, the user data, the additional system file image, and the additional user data, from the optical disc.

66. The system of Claim 65, wherein the operation further includes:
storing the at least one of the system file image, the user data, the additional system file image, and the additional user data, in the storage device; and
displaying the at least one of the system file image, the user data, the additional system file image, and the additional user data to the host apparatus.

67. A computer program product stored on a computer readable storage medium for carrying out a method, when run on an apparatus, the method comprising the steps of:
storing user data in a directory hierarchy;
obtaining file/directory information including information regarding the directory hierarchy of the user data;
creating a volume descriptor section based on the file/directory information;
creating a first file system section based on the file/directory information in a first format;
creating a second file system section based on the file/directory information in a second format, having a length larger than a length of the first file system section; and
generating a system file image of the user data, including the volume descriptor section, the first file system section, and the second file system section.

68. The product of Claim 67, wherein the directory hierarchy comprises:
a root directory; and
at least one subdirectory located under the root directory, including a subdirectory having the user data.

69. The product of Claim 68, wherein the first file system section comprises:
a first path table consisting of information regarding the root directory; and
a first root directory descriptor including dummy information.

70. The product of Claim 69, wherein the method further comprises the steps of:
mounting an optical disc;
recording the system file system image and the user data onto a first session of the optical disc; and
closing the first session.

71. The product of Claim 70, wherein the method further comprises the steps of:
reading at least one of the system file image and the user data from the first session of the optical disc.

72. The product of Claim 71, wherein the method further comprises the steps of:
storing additional user data in a directory hierarchy;
obtaining the file/directory information of the user data from the first session of the optical disc; and
obtaining additional file/directory information including information regarding the directory hierarchy of the additional user data.

73. The product of Claim 72, wherein the volume descriptor section of the first session comprises a primary volume descriptor configured to describe the first file system section in the first format.

74. The product of Claim 73, wherein the method further comprises the step of:
copying the primary volume descriptor of the first session onto a second session of the optical disc.

75. A computer readable medium having a ROM section and a RAM section,
wherein the ROM section stores computer instructions for performing an operation including:
obtaining file/directory information including information regarding the directory hierarchy of the user data;
creating a volume descriptor section based on the file/directory information;
creating a first file system section based on the file/directory information in a first format;
creating a second file system section based on the file/directory information in a second format, having a length larger than a length of the first file system section; and
generating a system file image of the user data, including the volume descriptor section, the first file system section, and the second file system section.

76. An optical medium having a volume space including a system area and a data area, wherein the data area comprises:
a file section configured to store user data organized in a directory hierarchy;
a first file system section configured to describe the directory hierarchy of the user data in a first format;
a second file system section configured to describe the directory hierarchy of the user data in a second format and have a length larger than a length of the first file system section; and
a volume descriptor section configured to describe the data area in the first format and the second format.

77. The optical medium of Claim 76, wherein the first format includes the ISO 9660 standard.

78. The optical medium of Claim 77, wherein the directory hierarchy comprises:
a root directory; and
at least one subdirectory located under the root directory, including a subdirectory having the user data.

79. The optical medium of Claim 78, wherein the first file system section comprises:
a first path table consisting of information regarding the root directory; and
a first root directory descriptor including dummy information.

80. The optical medium of Claim 79, wherein the system area and the data area are located in a first session of the volume space.

81. The optical medium of Claim 80, wherein the volume space further includes a second session, the second session comprising:
a second file section configured to store additional user data organized in a directory hierarchy;
a third file system section configured to describe the directory hierarchy of the additional user data in a third format; and
a second primary volume descriptor including information copied from the first primary volume descriptor.
